# EUROPEAN PATENT SPECIFICATION

(11) **EP 0 620 902 B1**
(45) Date of publication and mention of the grant of the patent: **13.09.1995**
(21) Application number: 93901432.0
(22) Date of filing: 05.01.1993
(51) Int. Cl.: F16G 11/02, B21F 15/06

(54) **A MACHINE FOR MAKING A SLING**
MASCHINE ZUR HERSTELLUNG VON SCHLINGEN
MACHINE POUR FABRIQUER DES ELINGUES

(30) Priority: 08.01.1992 SE 9200030
(43) Date of publication of application: 26.10.1994
(73) Proprietor: TALURIT AB, S-421 31 Västra Frölunda (SE)
(72) Inventor: SJÖHOLM, Rolf, S-421 63 Västra Frölunda (SE)
(74) Representative: Roth, Ernst Adolf Michael
(86) International application number: SE9300005
(87) International publication number: WO9314330

(56) References cited:
- GB-A- 791 479
- SE-B- 464 044

## Description

The present invention refers to a machine to form a sling, that consists of a wire, the end portions of which each forms a loop and with its outer end portions is held each in a clamping sleeve applied on the wire.

Different types of machines have been developed to form such slings, which are used for different purposes within the load handling. Such a machine is known through the Swedish patent application SE-A-8902250-3, corresponding to publication SE-B-464044, published 25 Febr. 1991.

Through the invention a machine has been developed, that constitutes a further development of the prior art and that exhibits advantages compared with earlier known techniques. The characterizing features of this machine will be illustrated by the following claims.

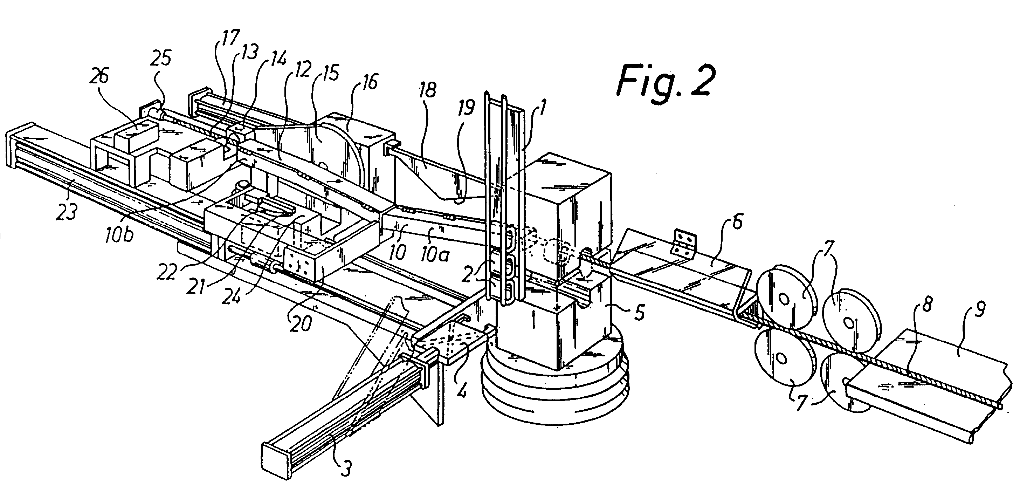

The invention will now be closer described with reference to the enclosed drawings, in which fig. 1 discloses the machine perspectively at an angle from the side, fig. 2 discloses perspectively at an angle from the top and at an enlarged scale substantial parts included in the machine in one position and in fig. 3 is shown the same view with the parts of the machine in another position and fig. 4-7 disclose different sequences of the wire feed.

In the machine a sleeve magazine 1 with a number of clamping sleeves 2 and a feeding mechanism 4 actuated by a piston cylinder 3 are included for loading these clamping sleeves 2 provided in a press device 5.

On the input side of the press device 5 is provided a guide flap 6, that is pivotable upwards-downwards. Outside the guide flap 6 are provided four feed rollers 7, between which a wire 8 is feedable, which wire is arranged on a table 9 serving as a bed.

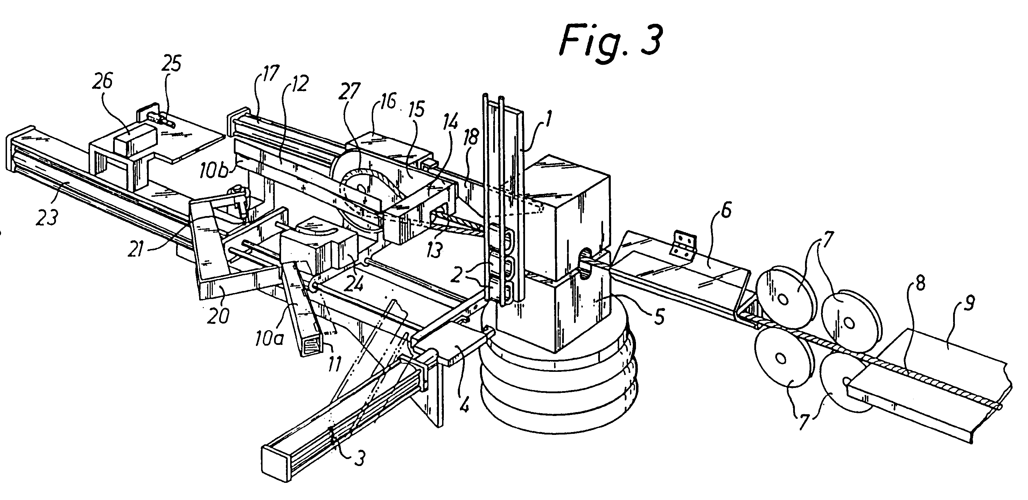

On the opposite side of the press device 5, the output side, a duct 10 is provided, which consists of two parts 10a and 10b. The part 10a, located nearest the output side of the press device 5, can be swung away in the manner shown in fig. 3. This part 10a of the duct 10 has a hinged lateral wall 11 which can be opened. The other part 10b of the duct 10 is stationary and provided with an upper part 12 which can be folded up. The duct 10 is intended to guide the front end portion 13 of the wire 8 during the feed of the wire through the press device 5. In front of the outlet port of the drum 10 is provided a clamping device 14, that is arranged to grip the wire 8 at some distance behind its front end. The clamping device 14 preferably is constituted by a hydraulic driven tightening cylinder. The clamping device 14 is rigidly mounted to a revolving means 15, which by carrying the clamping device 14 mainly is pivotable 180 degrees by means of a revolving mechanism 16. This preferably consists of a hydraulic piston cylinder 17 with gear rack and pinion (not shown) known per se. The revolving mechanism 16 is movable together with the revolving means 15 and the clamping device 14 by means of a piston cylinder (see below) in direction to and from the press device 5. A cam also follows this reciprocating movement, which cam as seen from its front has a lower edge 19a directed backwards and obliquely downwards, the function of which will be described later. Part 10a of the duct 10 is firmly attached to a pivot arm 20, which is provided with a vertical downwards directed dowel 21, that runs in a curve shaped slot 22 in a slide 24 which is displaceable by means of a piston cylinder 23 in a direction to and from the press device 5. This slide is rigidly connected to the parts 14, 15, 16 and 18.

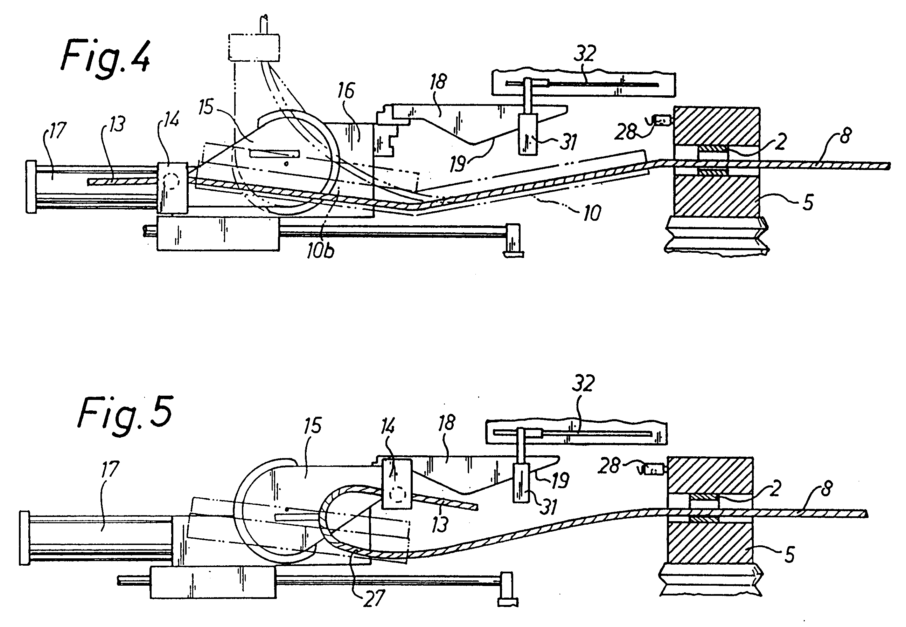

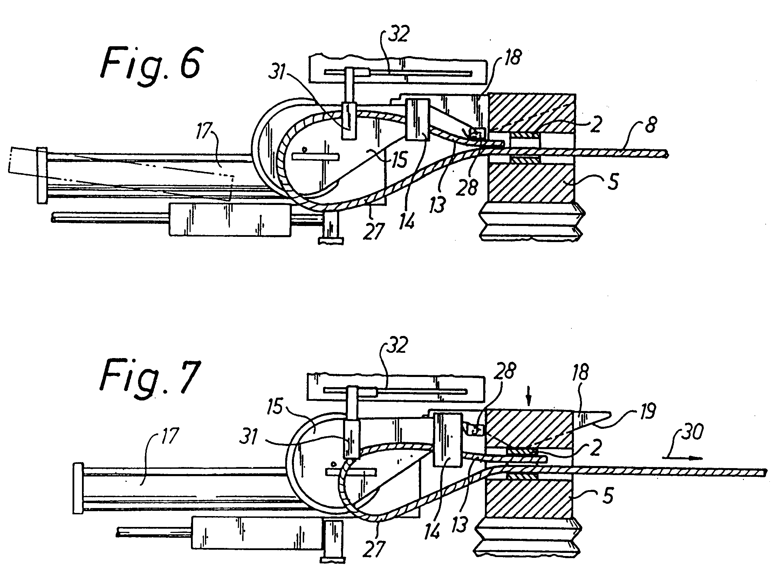

The function of the machine will be described in more detail in the following. A wire 8 is manually entered between the feed rollers 7, whereby the guide flap 6 is in lowered position. The feed rollers 7 feed the wire 8 under the flap 6, which guides the wire through the press device 5 and through a clamping sleeve 2 introduced from the magazine 1 and further through the parts 10a and 10b of the duct 10 towards a stop 25. An indicating device 26 detects the correct feed length of the wire 8, gives a signal to stop the driving motor of the feed wheels 7, as well as activates the clamping device 14. The pressure in this device propagates to a pressure switch not shown, which switch in turn activates the revolving mechanisms 16, 17 of the revolving means 15. The revolving means 15 now rotates round the clamping device 14 with the end portion of the wire 13 substantially half a turn for formation of a wire loop 27, which is shown in fig. 4 and 5. During the formation of the wire loop 27 the wire penetrates up from part 10b of the duct, which is possible by the fact that the upper part 12 of the part 10b of the duct is foldable upwards. The piston cylinder 23 is now activated and moves the revolving means 15 with the clamping device 14 holding the wire loop 27 and the slide 24 in direction towards the press device 5. During this movement the dowel 21 is forced to run in the curve shaped slot 22. Hereby the arm 20 is brought to swing out, carrying the part 10a of the duct, such as illustrated in fig. 3. By swinging up of the side 11, the part 10a of the duct is released from the wire 8 and gives space for the loop 27 with the equipment about this to approach the press device 5. The cam 18 follows with the movement towards the press device 5, which cam comes into contact with its inclined lower edge 19 against a guide cone 28 provided at the press device 5, which cone is moved to a position just in front of the clamping sleeve 2 by means of the lower edge 19. The guide cone 28 serves for guidance of the end portion of the wire 13 into the clamping sleeve 2, see fig. 6.

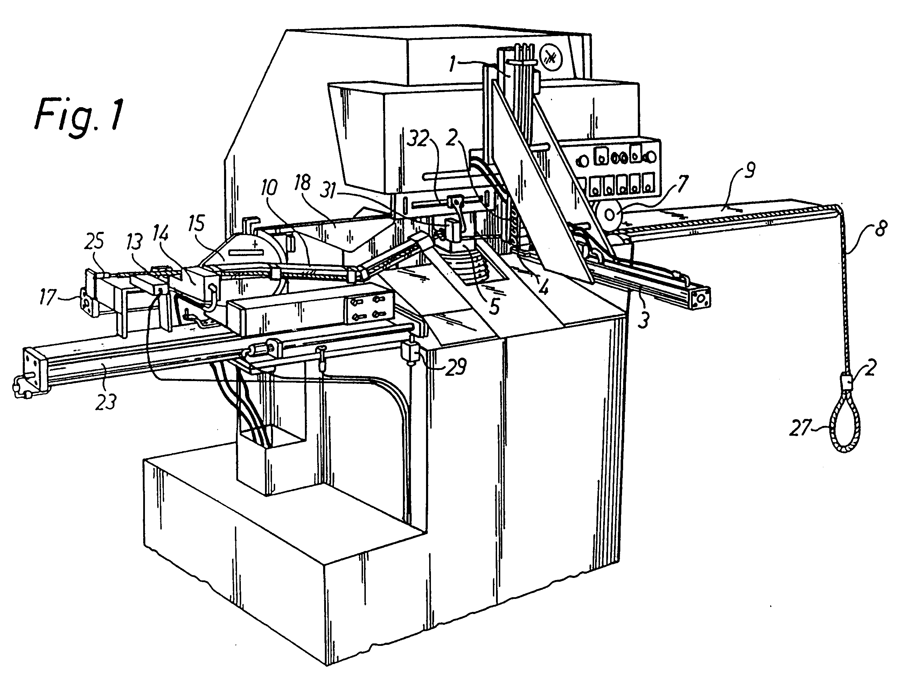

An indicating device 29, see fig. 1, detects the feed of the end portion of the wire into a correct position in the clamping sleeve 2 and gives a signal to reverse the wire feed. The wire 8 is now pulled back a distance in the direction of the arrow 30, see fig. 7. Another indicating means 31, which is adjustable in a horizontal slot 32, detects a calculated, correct size of the loop 27 and interrupts the reverse movement. The same indicating device 31 gives a signal to the press device 5 to press together the clamping sleeve 2 for formation of a wire lock. After the pressing procedure, which ends when the set value on the manometer has been reached, the press piston goes back, and a signal is given to the hinge of the guide flap 6 for releasing the wire 8. The clamping device 14 releases its grip. Even the feed wheels 7 are separable for release of the wire 8.

As a result of the invention a machine for complete mechanized manufacturing of slings has been developed. By means of various indicating devices, mentioned as well as not mentioned, it has been possible to completely automate the manufacture. One of the greatest advantages of the machine lies foremost therein, that it is easy adaptable to slings with different thickness of the wire 8 and different sizes of the wire loop 27. When changing from a wire of a certain thickness to another wire with a larger thickness, it is only necessary to shift the magazine with clamping sleeves 2 to another with slightly thicker clamping sleeves, and when shifting the size of wire loop it is only needed to change the set-up of the indicating device 31 to adjust the time for the reverse of the wire 8.

The invention is of course not limited to the embodiment shown and described above but can be varied in different ways within the scope of the subsequent claims. This applies as well to the type of feed wheels 7 and guidance into the press device 5 as type of revolving means 15 and clamping device 14 for holding the end portion of the wire.

## Claims

1. Machine to form a sling, consisting of a wire (8), each end portions of which each forms a loop (27) and with its outer end portions are held each in a clamping sleeve (2) provided on the wire (8), in which machine is included means (3,4) to feed clamping sleeves (2) from a magazine (1) to a press device (5) for pressing together the clamping sleeves (2),
**characterized in**,
**that** the machine includes
- feed wheels (7) for feeding the wire (8) into one side of the press device (5), through a clamping sleeve (2) introduced in the press device (5) and out to the opposite side of the press device (5),
- an elongated duct (10) situated on the output side of the press device (5), which duct is divided into two parts (10a, 10b), of which the part (10a) situated nearest the press device (5) can be swung off from the wire feeding direction before each press operation, while the second part (10b) is stationary, said duct being adapted to guide the front end portion (13) of the wire (8) in the feeding direction during the continued feed of the feed wheels (7) of the wire (8),
- a clamping device (14) situated outside the outlet port of the duct (10), which clamping device is arranged to grip the wire (8) a distance behind its front end and which clamping device is firmly attached to a revolving device (15) which is movable forward and reverse, which revolving device (15) is arranged to rotate the clamping device (14) with the end portion of the wire (13) in the main 180 degrees for formation of a wire loop (27) and lead back the end portion of the wire (13) towards the press device (5) so far, that the end portion of the wire penetrates through the clamping sleeve (2) essentially parallel to the portion of the wire (8) that extends through the clamping sleeve (2),
- a first indicating device (29), which is provided to detect correct feeding position for the end portion of the wire in the clamping sleeve (2) after the formation of the wire loop (27) and to give signal to reverse the wire feeding and
- a second indicating device (31), that is arranged to detect correct, calculated size of the wire loop (27) and to subsequently give signal to the press device (5) for compressing of the clamping sleeve (2).

2. Machine according to claim 1,
**characterized in**,
**that** a guide flap (6) is provided before the input side of the press device (5), which guide flap (6) is provided to guide the end portion of the wire (13) during its feed into the press device (5), and that the second indicating device (31) after the pressing of the clamping sleeve (2) is provided to give signal for the swing off movement of the guide flap (6) for release of the wire (8).

3. Machine according to claim 1,
**characterized in**,
a cam (18) accompanying the reciprocating movement of the revolving means (15), which seen in the forward direction of the cam (18) has a lower edge (19) directed backwards and obliquely downwards and which is provided to relocate a guide cone (28) to a position opposite the clamping sleeve (2) for guidance of the end portion of the wire into this, when the clamping device (14) moves back the end portion of the wire (13) in direction towards the press device (5) with this lower edge (19).

4. Machine according to claim 1,
**characterized in**,
**that** the part (10a) of the duct which is situated nearest the press device (5) is provided with an upwards or downwards pivotable lateral wall (11), while the second part (10b) is provided with an upwards pivotable upper part (12).

## Patentansprüche

1. Maschine zur Bildung einer Schlinge, bestehend aus einem Draht (8), von dem jeder Endabschnitt jeweils eine Schlaufe (27) bildet, wobei seine äußeren Endabschnitte jeweils in einer Klemmuffe (2), die auf dem Draht (8) aufgebracht ist, zusammengehalten werden, wobei die Maschine Vorrichtungen (3, 4) enthält, um Klemmuffen (2) aus einem Magazin (1) einer Preßvorrichtung (5) zuzuführen, um die Klemmuffen (2) zusammenzupressen,
**gekennzeichnet dadurch**,
daß die Maschine folgendes umfaßt:
- Zuführräder (7), um den Draht (8) in eine Seite der Preßvorrichtung (5) hineinzuführen, durch eine in die Preßvorrichtung (5) eingeführte Klemmuffe (2) hindurchzuführen und aus der gegenüberliegenden Seite der Preßvorrichtung (5) herauszuführen,
- eine langgestreckte Röhre (10), an der Ausstoßseite der Preßvorrichtung (5) befindlich, wobei die Röhre in zwei Teile (10a, 10b) unterteilt ist, von denen der Teil (10a), der der Preßvorrichtung (5) am nächsten liegt, von der Drahtzuführungsrichtung vor jedem Preßvorgang wegschwenkbar ist, während der zweite Teil (10b) feststehend ist, wodurch die erwähnte Röhre dafür geeignet ist, das vordere Ende (13) des Drahtes (8) während der fortgesetzten Zuführung des Drahtes (8) über die Zuführräder (7) in die Zuführungsrichtung zu leiten,
- eine Klemmvorrichtung (14), befindlich außerhalb der Austrittsöffnung der Röhre (10), wobei die Klemmvorrichtung dafür eingerichtet ist, den Draht (8) ein Stück hinter seinem vorderen Ende zu erfassen, und wobei die Klemmvorrichtung fest an eine Drehvorrichtung (15) angebracht ist, die vorwärts und rückwärts beweglich ist, wobei die Drehvorrichtung (15) dafür eingerichtet ist, die Klemmvorrichtung (14) mit dem Endabschnitt des Drahtes (13) hauptsächlich um 180 Grad zu drehen, um eine Drahtschlaufe (27) zu bilden und den Endabschnitt des Drahtes (13) zur Preßvorrichtung (5) so weit zurückzuführen, damit der Endabschnitt des Drahtes durch die Klemmuffe (2) im wesentlichen parallel zu dem Abschnitt des Drahtes (8) hindurchgeht, der über die Klemmuffe (2) hinausreicht,
- ein erstes Anzeigegerät (29), was dafür vorgesehen ist, die korrekte Zuführungsstellung für den Endabschnitt des Drahtes in der Klemmmuffe (2) nach der Bildung der Drahtschlaufe (27) zu festzustellen und das Signal für den Rückwärtslauf des Drahtvorschubs zu geben, und
- ein zweites Anzeigegerät (31), das dafür eingerichtet ist, um die korrekte, berechnete Größe der Drahtschlaufe (27) zu festzustellen und anschließend das Signal an die Preßvorrichtung (5) für das Zusammenpressen der Klemmuffe (2) zu geben.

2. Maschine nach Anspruch 1,
**gekennzeichnet dadurch**,
daß eine Führungsklappe (6) vor der Eingangsseite der Preßvorrichtung (5) vorgesehen ist, wobei die Führungsklappe (6) dafür vorgesehen ist, den Endabschnitt des Drahtes (13) während seiner Zuführung in die Preßvorrichtung (5) zu lenken, und daß das zweite Anzeigegerät (31) nach dem Zusammenpressen der Klemmuffe (2) dafür vorgesehen ist, das Signal für die Abschwenkbewegung der Führungsklappe (6) zur Freigabe des Drahtes (8) zu geben.

3. Maschine nach Anspruch 1,
**gekennzeichnet durch**
einen die Hin- und Herbewegung der Drehvorrichtung (15) begleitenden Steuernocken (18), der in Richtung der Vorwärtsbewegung des Steuernockens (18) gesehen eine tiefer liegende Kante (19) hat, die rückwärts und schräg abwärts gerichtet ist, und der dafür vorgesehen ist, einen Führungszapfen (28) in eine Stellung gegenüber der Klemmuffe (2) zu verschieben, um den Endabschnitt des Drahtes dorthinein zu lenken, sobald die Klemmvorrichtung (14) den Endabschnitt des Drahtes (13) in Richtung zur Preßvorrichtung (5) mit dieser tiefer liegenden Kante (19) zurückbewegt.

4. Maschine nach Anspruch 1,
**gekennzeichnet dadurch**,
daß der Teil (10a) der Röhre, der der Preßvorrichtung (5) am nächsten liegt, mit einer aufwärts oder abwärts drehbaren Seitenwandung (11) versehen ist, während der zweite Teil (10b) mit einem aufwärts drehbaren oberen Teil (12) versehen ist.

## Revendications

1. Machine pour fabriquer une élingue constituée par un câble métallique (8) dont chaque partie terminale forme une boucle (27) et dont les extrémités distales sont toutes deux maintenues dans un manchon de serrage (2) prévu sur le câble métallique (8), ladite machine étant dotée de moyens (3, 4) pour alimenter en manchons de serrage (2) provenant d'un magasin (1) un équipement de presse (5) permettant de sertir les manchons de serrage (2), caractérisée en ce que la machine comporte :
- des galets d'amenée (7) qui amènent le câble métallique (8) sur un côté de l'équipement de presse (5), à travers un manchon de serrage (2) introduit dans l'équipement de presse (5) et le ressortent du côté opposé de l'équipement de presse (5),
- un conduit de forme allongée (10) situé du côté sortie de l'équipement de presse (5), ledit conduit étant divisé en deux parties (10a, 10b), la partie (10a) la plus proche de l'équipement de presse (5) pouvant être basculée hors du passage d'amenée du câble métallique avant chaque opération de sertissage, tandis que la seconde partie (10b) est fixe, ledit conduit étant adapté pour guider l'extrémité avant (13) du câble métallique (8) dans le sens de déplacement pendant l'alimentation continue du câble métallique (8) par les galets d'amenée (7),
- un dispositif de serrage (14) situé à l'extérieur de l'orifice de sortie du conduit (10), ledit dispositif de serrage (14) étant agencé pour saisir le câble métallique (8) à une certaine distance en arrière de son extrémité avant, ce dispositif de serrage (14) étant fixé fermement à un dispositif de pivotement (15) pouvant se déplacer vers l'avant et vers l'arrière, ce dispositif de pivotement (15) servant à faire tourner le dispositif de serrage (14) avec la partie terminale (13) du câble métallique, d'un angle de 180° pour former une boucle de câble métallique (27) et ramener la partie terminale (13) du câble métallique en direction de l'équipement de presse (5), jusqu'à ce que la partie terminale du câble métallique passe dans le manchon de serrage (2) en étant essentiellement parallèle à la partie du câble métallique (8) déjà passée dans le manchon de serrage (2),
- un premier dispositif indicateur (29) prévu pour détecter la position d'amenée correcte pour la partie terminale du câble métallique dans le manchon de serrage (2) après la formation de la boucle de câble métallique (27) et pour donner le signal d'inversion du sens d'amenée du câble métallique, et
- un second dispositif indicateur (31) prévu pour détecter la taille correcte calculée de la boucle de câble métallique (27) après la formation de la boucle de câble métallique (27) et pour donner alors à l'équipement de presse (5) le signal de sertissage du manchon de serrage (2).

2. Machine selon la revendication 1, caractérisée en ce qu'un volet de guidage (6) est prévu en amont du côté entrée de l'équipement de presse (5), ledit volet de guidage (6) étant prévu pour guider la partie terminale du câble métallique (13) lorsqu'elle est amenée à l'équipement de presse (5) et en ce que le second dispositif indicateur (31) est prévu pour donner le signal du mouvement de basculement du volet de guidage (6) pour libérer le câble métallique (8) après l'opération de sertissage du manchon de serrage (2).

3. Machine selon la revendication 1, caractérisée en ce qu'elle comporte une came (18) accompagnant le mouvement alternatif du dispositif de pivotement (15) qui, vue de l'arrière de la came (18) comporte un bord inférieur (19) dirigé vers l'arrière et obliquement vers le bas, servant à replacer un cône de guidage (28) dans une position opposée au manchon de serrage (2) afin de guider la partie terminale du câble métallique dans ce dernier, lorsque le dispositif de serrage (14) ramène la partie terminale du câble métallique (13) en direction de l'équipement de presse (5) avec ce bord inférieur (19).

4. Machine selon la revendication 1, caractérisée en ce que la partie (10a) du conduit qui est la plus proche de l'équipement de presse (5) comporte une cloison latérale (11) susceptible de pivoter vers le haut et vers le bas, la seconde partie (10b) étant dotée d'une partie supérieure (12) pouvant pivoter vers le haut.
